# EUROPÄISCHE PATENTSCHRIFT

(11) **EP 0 384 290 B1**
(45) Veröffentlichungstag und Bekanntmachung des Hinweises auf die Patenterteilung: **04.08.1993**
(21) Anmeldenummer: 90102919.9
(22) Anmeldetag: 15.02.1990
(51) Int. Cl.: C05F 15/00, C05F 1/00

(54) **Verfahren zur Verwertung von Federabfällen**
Process for adding value to feather waste
Procédé de valorisation de déchets de plumes

(30) Priorität: 17.02.1989 DE 3904820
(43) Veröffentlichungstag der Anmeldung: 29.08.1990
(73) Patentinhaber: Schneider, Ingrid, 96199 Zapfendorf (DE)
(72) Erfinder: Schneider, Karl, D-8619 Zapfendorf (DE); Feige, Wolfgang, Prof.-Dr., D-8821 Weidenbach (DE)
(74) Vertreter: Werner, Hans-Karsten, Dr.Dipl.-Chem.

(56) Entgegenhaltungen:
- CH-A- 201 968
- CH-A- 207 957
- FR-A- 1 526 020
- GB-A- 505 581
- US-A- 2 640 772
- CHEMICAL ABSTRACTS, vol. 98, no. 12, 21 März 83 Columbus, Ohio, USA H. KALLIO-et al.: "Composting of sewage sludge and other wastes from a food processing plant in Finland" & Ann. Agric. Fenn. 1982, 21(2), 91-102 Seite 336; ref. no. 95084R
- CHEMICAL ABSTRACTS, vol. 103, no. 3, 22 Juli 1985 Columbus, Ohio, USA G. Fodor et al.: "Fertilizer from poultry feathers" & HU-A-33990 (Pankotai Allami Gazdasag) (28-01-1985) Seite 511; ref. no. 21781R

## Beschreibung

Gegenstand der vorliegenden Erfindung ist ein Verfahren zur Verwertung von Federabfällen aus der mechanischen Reinigung von Federbetten. In der Bundesrepublik fallen jährlich ca. 4000 Tonnen Federabfälle aus der mechanischen Federreinigung an. Bisher wurden diese Abfälle in Müllverbrennungsanlagen verbrannt oder in Abfalldeponien abgelagert. Beide Verwertungsarten sind teuer und nicht sehr umweltfreundlich, so daß die Aufgabe bestand, eine sinnvollere und umweltspolitisch sinnvollere Verwertung von diesen Federabfällen zu finden.

Federn bestehen hauptsächlich aus Keratin. Keratin ist ein mechanisch und chemisch widerstandsfähiger schwefelhaltiger Eiweißkörper, der in Böden nur sehr langsam mikrobiell abgebaut wird. So werden ebenfalls hauptsächlich aus Keratin bestehende Hörner oder Hufe zu Hornspänen oder Hornmehl verarbeitet und als sehr langsam wirkende organische Stickstoff-Düngemittel eingesetzt, die besonders in biologisch hoch aktiven Gartenböden (Hobbygärten) eine hier geschätzte verhaltene Stickstoffwirkung zeigen.

Die Umwandlung von Federabfällen zu einem Bodenverbesserungsmittel ist aufgrund der Struktur dieses Materials wesentlich schwieriger als die Aufbereitung von Hornsubstanzen. Mechanische Aufbereitungsverfahren, wie Zerkleinern oder Zermahlen sind nur sehr schwierig durchzuführen, so daß es bisher nicht gelungen ist, auf diesem Wege ein den Hornspänen oder Hornmehl entsprechendes Federmehl herzustellen. Erst sehr aufwendige thermische Druckaufschlußverfahren mit anschließender Trocknung und Vermahlung führen zu einem aufgeschlossenen Federmehl, das bei der Futtermittelherstellung eingesetzt wird.

Aus der HU-A-33990 ist es bekannt, von Schlachtgeflügel stammende Federn mit Kot und anderen Abfällen zu kompostieren.

Es wurde jetzt durch umfangreiche Versuche gefunden, daß es möglich ist, die Federabfälle ohne teure Aufschlußverfahren aus der mechanischen Reinigung von Federbetten dadurch sinnvoll zu verwerten, daß diese Abfälle mit mindestens 50 Vol.-% verottbaren stickstoffarmen Kohlenstoffträgern, insbesondere Rindenmulch, Sägespäne, gehächselten Stroh oder Gemischen derselben vermischt, kompostiert und zu streufähigen Bodenverbesserungsmitteln verarbeitet werden.

Dabei hat es sich als sehr vorteilhaft erwiesen, dem Gemisch vor dem Kompostieren bis zu 5 Vol.-% Harnstoff und bis zu 5 Vol.-% Kalk- und/oder Magnesiummergel beizumischen. Die Versuche haben ergeben, daß pro m³ Rohkompost zur optimalen Verrottung 3-5 kg Kalk- oder Magnesiummergel zugeschlagen werden sollten. Da sich das Federmaterial bei der Kompostierung wider Erwarten doch relativ rasch umsetzt, kann aber auch der Zusatz von löslichem Stickstoff, z.B. Harnstoff, entfallen.

Weiterhin hat es sich als sehr vorteilhaft erwiesen, das Gemisch während des Kompostierens durch gezieltes Umsetzen mit ausreichenden Mengen Sauerstoff zu versorgen.

Um das Gemisch während des Kompostierens vor unerwünschter Auslaugung durch Regenwasser zu schützen, ist es sinnvoll, den Komposthaufen zumindest zeitweilig mit Folien abzudecken oder durch ein Schutzdach vor allzu großen Regenmengen zu schützen.

Bei der Entwicklung dieses Verwertungsverfahren wurde festgestellt, daß es nicht notwendig ist, die Federabfälle aus der mechanischen Reinigung von Federbetten intensiv zu zerkleinern. Gewünschtenfalls können die Federabfälle grob gehackt werden, so daß die größten Teile 2 bis 3 cm lang sind.

Den Federabfällen muß mindestens die gleiche Volumenmenge verrottbare Kohlenstoffträger beigemischt werden. Besonders gute Ergebnisse werden erzielt bei Verwendung von Rindenmulch, mit einer Körnung zwischen 0 und 10 cm. Gröbere Sägespäne oder gehächseltes Stroh kommen ebenfalls in Frage, führen aber zu einem ungünstigem Kompostierungsverlauf. Ausgezeichnete Ergebnisse wurden auch erreicht, wenn ein Gemisch aus überwiegend Rindenmulch mit groben Sägespänen und/oder gehächselten Stroh eingesetzt wird.

In den zu kompostierenden Gemischen soll der Gehalt an Federabfällen nicht über 50 Vol.-% liegen. Vorzugsweise beträgt der Anteil an Federabfällen im Gemisch 20 bis 40 Vol.-%. Ein hoher Anteil an Federabfällen führt zwar anfangs zu einer relativ heftigen Verrottung, die sich auch durch relativ hohe Temperaturen bemerkbar macht, jedoch ist es dann meist nicht möglich, das Gemisch mit ausreichenden Mengen Sauerstoff zu versorgen. Sauerstoffmangel führt aber rasch zu anaeroben Verrottungsprozessen, die mit sehr unangenehmen Geruchsbelästigungen verbunden sind. Insbesondere aus diesem Grund, aber auch um die Kompostierung rasch und wirksam durchführen zu können, sollte das Gemisch gezielt umgesetzt werden. Umsetzungen im Abstand zwischen 2 und Wochen anfangs und 6 bis 8 Wochen später haben sich bewährt. Die Gesamtrottezeit beträgt im allgemeinen 15 bis 20 Wochen, wobei die letzten Wochen im allgemeinen keinen großen Einfluß mehr auf die Qualität des Endproduktes haben.

Während der Rottezeit kommt es zu deutlichen Temperaturerhöhungen im Gemisch. Gute Ergebnisse werden bereits erzielt, wenn im Inneren des Gemisches Temperaturen zwischen 50 und 60°C entstehen. Gelegentlich werden auch Temperaturen bis zu 80°C beobachtet. Ein Absinken der Temperaturen ist im allgemeinen ein Hinweis auf fehlende Sauerstoffzufuhr, so daß spätestens dann das Gemisch umgesetzt werden sollte.

Der Zusatz von Kalk- und/oder Magnesiummergel beeinflußt einerseits den Verrottungsprozeß und gibt andererseits besser einsetzbare streufähige Bodenverbesserungsmittel. Es entstehen dadurch Produkte, die neutral bis schwach sauer reagieren, so daß sie, als Düngekompost mit Mutterboden vermischt, gut eingesetzt werden können.

Im erfindungsgemäßen Verfahren werden die Federabfälle auch ohne mechanische Verkleinerung in ein Produkt überführt, in welchem der Stickstoff zu etwa 25 - 30 % bereits als Mineralstickstoff vorliegt, der unmittelbar von den Pflanzen aufgenommen werden kann. Gegenüber der verzögerten Stickstoffwirkung von Hornmehlen zeichnet sich der vorliegende Düngekompost durch rasche und nachhaltige Stickstoffwirkung aus. Außerdem entsteht bei dem erfindungsgemäßen Verfahren ein leicht handhabbares, streufähiges Material. Ein Mehl aus Federabfällen, sofern es überhaupt wirtschaftlich als Stickstoffdünger einsetzbar ist, wäre sicherlich schwerer handhabbar.

Ein weiterer Vorteil des erfindungsgemäßen Verfahren ist, das es dezentral in der Nähe des Anfalls der Federabfälle durchgeführt werden kann, so daß lange Wege zu Müllverbrennungsanlagen oder Deponien entfallen.

Vegetationsteste mit der empfindlichsten Versuchspflanze, Kresse, sowie mit pelierten Kopfsalatsamen haben ergeben, daß das erfindungsgemäße streufähige Bodenverbesserungsmittel im Gemisch mit Gartenerde ohne weiteres eingesetzt werden kann. Nur bei Verwendung von Produkten mit sehr hohem Anteil von Federabfällen im Gemisch und unzureichender Abpufferung des pH-Wertes durch Kalk- oder Magnesiummergel führen im Gemisch mit wenig Gartenerde zu Keimhemmungen.

Der Fertigkompost ist ein Stickstoff-betonter Düngekompost, der vergleichsweise arm an Phosphor ist und begrenzte Kalimengen enthält. In dieser Herstellungsform eignet er sich besonders für Böden mit überhöhten Phosphor- und Kaligehalten (Haus- und Kleingärten) als Humus- und Stickstoffdünger.

Es kann nützlich sein, dem Rohkompost 5 - 10 kg Steinmehl oder Bentonit zuzusetzen, um die Rotte zusätzlich zu fördern, den Kaliumanteil im Steinmehl bei der Verrottung zu aktivieren und den Fertigkompost mit aktiver Kieselsäure, die boden- und pflanzenstabilisierend wirkt, anzureichern. In dieser Herstellungsform ist das Fertigprodukt besonders in Hobbygärten sowie in Gärtnereien und Landwirtschaftsbetrieben einsetzbar, die alternative Produktionsverfahren unter weitgehender Ausschaltung von Mineraldüngern anwenden, aber dennoch die dem Boden entzogenen Nährstoffe ersetzen müssen.

Nach der überwiegend bakteriell geprägten Hauptrotte, bei der schon ein Teil der ringförmigen N-Verbindungen aufgeschlossen und mineralisiert werden, kann der Kompost einer Nachveredelung unterzogen werden.

In dieser durch pilzliche Organismen geprägten Veredelungsphase werden die schwer zersetzbaren Rindenlignine destabilisiert und mit mobilisiertem Stickstoff aus der Keratinzersetzung zu N-reichen Huminstoffen synthetisiert. Für diese zweite Phase ist ein Zeitraum von mehreren Monaten nötig.

Das Endprodukt ist dann ein stabilisierter Stickstoff-Kompost, der sich aufgrund seiner stofflichen Zusammensetzung, nämlich hohem Humus- und Stickstoffgehalt, geringer Phosphat- und Kalikonzentration, besonders für Phosphat- und Kali-überdüngte Hobbygartenböden eignet. Darüber hinaus kann dieses Veredelungsprodukt besonders dort vorteilhaft als Düngestoff eingesetzt werden, wo alternativer Gartenbau betrieben wird und mineralische Stickstoffdünger nicht eingesetzt werden dürfen.

## Patentansprüche

1. Verfahren zur Verwertung von Federabfällen aus der mechanischen Reinigung von Federbetten, dadurch gekennzeichnet, daß diese Abfälle mit mindestens 50 Vol.-% verottbaren Kohlenstoffträgern, insbesondere Rindenmulch, Sägespäne, gehächselten Stroh oder Gemischen derselben vermischt, kompostiert und zu streufähigen Bodenverbesserungsmitteln verarbeitet werden.

2. Verfahren gemäß Anspruch 1, dadurch gekennzeichnet, daß dem Gemisch vor dem Kompostieren bis zu 5 kg Kalk- und/oder Magnesiummergel pro m³ Rohkompost beigemischt werden.

3. Verfahren gemäß Anspruch 1 oder 2, dadurch gekennzeichnet, daß dem Gemisch bis zu 10 kg Steinmehl, Bentonit oder Rohphosphat zugeschlagen werden, um bestimmte Nährstoffgehalte einzustellen.

4. Verfahren gemäß einem der Ansprüche 1 bis 3, dadurch gekennzeichnet, daß das Gemisch während des Kompostierens durch gezieltes Umsetzen mit ausreichenden Mengen Sauerstoff versorgt wird.

5. Verfahren gemäß einem der Ansprüche 1 bis 4, dadurch gekennzeichnet, daß das Gemisch während des Kompostierens zum Schutz gegen Regenwasser abgedeckt wird.

## Claims

1. A process for the utilization of feather waste from the mechanical cleaning of feather beds, characterized in that said waste is admixed with at least 50% by volume of putrescible carbonaceous materials, more particularly bark mulch, sawdust, chaffed straw or mixtures thereof, is composted and is further processed to make drillable soil-improving agents.

2. The process according to claim 1, characterized in that up to 5 kg of lime and/or magnesium marl per 1 m³ of crude compost are added to the mixture prior to composting.

3. The process according to claim 1 or 2, characterized in that up to 10 kg of stone meal, bentonite or raw phosphate are added to the mixture in order to adjust certain contents of nutrients.

4. The process according to anyone of claims 1 to 3, characterized in that the mixture while composted is supplied with sufficient amounts of oxygen by special restacking.

5. The process according to anyone of claims 1 to 4, characterized in that the mixture while composted is covered for protection from rain water.

## Revendications

1. Procédé de valorisation de déchets de plumes provenant du nettoyage mécanique de lits de plumes, caractérisé en ce que ces déchets sont mélangés avec au moins 50 % de déchets pourrissables contenant du carbone, en particulier du paillis d'écorce, de la sciure, de la paille broyée ou des mélanges de ceux-ci, compostés, et transformés en moyens d'amendement du sol pouvant être dispersés.

2. Procédé selon la revendication 1, caractérisé en ce que jusqu'à 5 kg de marne et/ou d'argile magnésienne par m³ de compost brut sont ajoutés au mélange avant le compostage.

3. Procédé selon l'une quelconque des revendications 1 ou 2, caractérisé en ce que jusqu'à 10 kg de poussière inerte, de bentonite ou de phosphate brut sont ajoutés au mélange pour obtenir des teneurs en matières nutritive déterminées.

4. Procédé selon l'une quelconque des revendications 1 à 3, caractérisé en ce que, pendant le compostage, on fournit au mélange en le renversant exprès des quantités d'oxygène suffisantes.

5. Procédé selon l'une quelconque des revendications 1 à 4, caractérisé en ce que, pendant le compostage, le mélange est couvert pour le protéger de l'eau de pluie.
